# EUROPÄISCHE PATENTSCHRIFT

(11) **EP 4 217 892 B1**
(45) Veröffentlichungstag und Bekanntmachung des Hinweises auf die Patenterteilung: **18.03.2026**
(21) Anmeldenummer: 21773398.9
(22) Anmeldetag: 08.09.2021
(51) Int. Cl.: G06F 21/55

(54) **COMPUTERIMPLEMENTIERTES VERFAHREN, COMPUTERPROGRAMM, COMPUTERLESBARER DATENTRÄGER, DATENTRÄGERSIGNAL UND SYSTEM ZUR VERHINDERUNG EINES MODELL-DIEBSTAHL-ANGRIFFES AUF EIN SOFTWARESYSTEM UND STEUERUNGSSYSTEM FÜR EIN FAHRSYSTEM**
COMPUTER-IMPLEMENTED METHOD, COMPUTER PROGRAM, COMPUTER-READABLE DATA CARRIER, DATA CARRIER SIGNAL AND SYSTEM FOR PREVENTING A MODEL STEALING ATTACK ON A SOFTWARE SYSTEM, AND CONTROL SYSTEM FOR A DRIVING SYSTEM
PROCÉDÉ MIS EN OEUVRE PAR ORDINATEUR, PROGRAMME INFORMATIQUE, SUPPORT DE DONNÉES LISIBLE PAR ORDINATEUR, SIGNAL DE SUPPORT DE DONNÉES ET SYSTÈME DESTINÉ À EMPÊCHER UNE ATTAQUE DE VOL DE MODÈLE SUR UN SYSTÈME LOGICIEL, ET SYSTÈME DE COMMANDE POUR UN SYSTÈME D'ENTRAÎNEMENT

(30) Priorität: 24.09.2020 DE 102020212023
(43) Veröffentlichungstag der Anmeldung: 02.08.2023
(73) Patentinhaber: ZF Friedrichshafen AG, 88046 Friedrichshafen (DE)
(72) Erfinder: WOITSCHEK, Fabian, 66121 Saarbrücken (DE); SCHNEIDER, Georg, 56182 Urbar (DE)
(74) Vertreter: ZF Friedrichshafen AG
(86) Internationale Anmeldenummer: PCT/EP2021/074694
(87) Internationale Veröffentlichungsnummer: WO 2022/063577

(56) Entgegenhaltungen:
- EP-A1- 3 370 389
- EP-A1- 3 515 039
- DE-A1- 102019 115 585
- US-A1- 2019 260 768
- US-A1- 2019 303 567
- US-A1- 2020 134 391

## Beschreibung

Die Erfindung betrifft ein computerimplementiertes Verfahren, Computerprogramm, computerlesbarer Datenträger, Datenträgersignal und System zur Verhinderung eines Modell-Diebstahl-Angriffes auf ein Softwaresystem und ein Steuerungssystem eines Fahrsystems.

US 9 268 938 B1 offenbart ein System zur Integritätsbewertung und Einbruchserkennung in computergestützten Systemen. Dabei wird ein physikalischer Seitenkanal verwendet, um eine korrekte Funktionsweise des computergestützten Systems zu bewerten. Die Seitenkanalinformationen sind Informationen, die den Ausführungsstatus des Systems nicht ändern und umfassen unter anderem Sensorsignale wie Temperatur, Vibration, Druck, Zeitmessung, Stromverbrauch oder GPS-Koordinaten.

Modell-Diebstahl-Angriffe auf Maschinenlern-Modelle sind beispielsweise in F. Tramèr et al., Stealing Machine Learning Models via Prediction APIs, https://ar-xiv.org/pdf/1609.02943.pdf, offenbart.

CN 110 795 703 A offenbart ein Verfahren zur Verhinderung von Modell-Diebstahl-Angriffen.

US 2019/0347410 A1 offenbart ein Verfahren zur Ausfallsicherheit von Maschinenlern-Modellen gegen Modell-Diebstahl-Angriffe im Kontext von Machine-Learning-asa-Service.

Die US 2019/0303567 A1 betrifft die Detektion von Anomalien in Bit-Datenströmen, wobei die Bit-Datenströme über einen Datenbus zwischen zwei oder mehreren Geräten in einem Netzwerk ausgetauscht werden und die Anomaliedetektion mittels eines künstlichen neuronalen Netzwerks erfolgt.

Die US 2020/0134391 A1 betrifft ein Verfahren und ein Datenverarbeitungssystem zur Erkennung einer Manipulation eines maschinellen Lernmodells. Während einer Trainingsbetriebszeit werden dem maschinellen Lernmodell mehrere Eingangswerte zur Verfügung gestellt. In Reaktion auf einen vorbestimmten ungültigen Eingabewert wird das maschinelle Lernmodell darauf trainiert, dass ein vorbestimmter Ausgabewert erwartet wird. Das Modell wird durch Eingabe des vorgegebenen ungültigen Eingabewertes während einer Inferenzbetriebsperiode verifiziert, dass es nicht manipuliert wurde. Wenn der erwartete Ausgabewert durch das maschinelle Lernmodell in Reaktion auf den vorbestimmten Eingabewert bereitgestellt wird, dann wurde das maschinelle Lernmodell nicht manipuliert. Wenn der erwartete Ausgabewert nicht bereitgestellt wird, wurde das maschinelle Lernmodell manipuliert.

Die EP 3 370 389 A1 offenbart eine Anomaliedetektion in einem Cloud-Netzwerk von Fahrzeugen. Weiterer Stand der Technik ist beispielsweise in DE 10 2019 115585 A1 offenbart.

Das Ziel, fremde Produkte auszuspähen und kopieren zu wollen, ist weit verbreitet und für manche Unternehmen zu einem eigenen Geschäftsmodell geworden. Ein zusätzliches Risiko besteht, falls Informationen über die interne Funktionsweise in einem Softwaresystem in die Hände eines böswilligen Angreifers fallen, welcher nicht das System kopieren will, sondern ein Fehlverhalten dieses Systems hervorrufen möchte. Wenn dies gelingt, können Erpressungsforderungen auf den Softwarehersteller zukommen oder die Produkte absichtlich zu fehlerhaften Verhalten geführt werden, welches die zu Grunde liegende Hardware zerstören kann, um dem Image des Herstellers zu schaden. Im automotive Kontext besteht zusätzlich die Möglichkeit, dass Unfälle mit Personenschaden herbeigeführt werden, welche zu besonders schlechter Presse und einem Imageschaden führen können.

Aufgabe der Erfindung war es, ein alternatives System zur Verhinderung von Modell-Diebstahl-Angriffen, abgekürzt SVMA, bereitzustellen.

Die Gegenstände der Ansprüche 1, 10 und 13 lösen diese Aufgabe.

Nach einem Aspekt stellt die Erfindung ein computerimplementiertes Verfahren bereit zur Verhinderung eines Modell-Diebstahl-Angriffes auf ein Softwaresystem. Das Softwaresystem erhält Eingangsdaten und stellt Ausgangsdaten bereit, mit denen das Softwaresystem Hardwareteile umfassend Hardwareteile eines Fahrsystems regelt und/oder steuert. Das Verfahren umfasst die Schritte
- Erhalten der Eingangsdaten,
- Durchführen einer Anomalie-Erkennung auf den Eingangsdaten umfassend eine punktuelle Auswertung einzelner Datenpunkte, eine kontextuelle Auswertung mehrerer der Datenpunkte, eine kollektive Auswertung von Gruppen der Datenpunkten und/oder eine Zeitreihen-Auswertung der Datenpunkte, wobei Anomalien bei Ausreißern von den Datenpunkten umfassend Ausreißer in Datengröße einzelner der Datenpunkte, Ausreißer in Anzahl der Datenpunkte und/oder Ausreißer in einer Abfolge der Datenpunkte erkannt sind, und
- im Falle einer erkannten Anomalie Sichern einer Informationssicherheit des Softwaresystems umfassend Dokumentation des Angriffes, Meldung des Angriffes, Ändern der Funktionsweise des Softwaresystems, Extraktion eines Wasserzeichens, Ausführen des Softwaresystems in einem Notlauf-Betrieb und/oder Deaktivierung des Softwaresystems.

Nach einem weiteren Aspekt stellt die Erfindung ein Computerprogramm bereit zur Verhinderung eines Modell-Diebstahl-Angriffes auf das voran genannte Softwaresystem. Das Computerprogramm umfasst Befehle, die bewirken, dass ein Computersystem, das das Softwaresystem ausführt, die Schritte des erfindungsgemäßen Verfahrens ausführt, wenn das Computerprogramm auf dem Computersystem läuft.

Nach einem weiteren Aspekt stellt die Erfindung ein Steuerungssystem für ein Fahrsystem bereit. Auf dem Steuerungssystem läuft ein Softwaresystem, das Eingangsdaten von Sensoren des Fahrsystems erhält und Ausgangsdaten für Steuergeräte des Steuerungssystems umfassend Steuergeräte für Antriebssteuerung, Fahrerassistenzsysteme, automatisierte Fahrsysteme und aktive und/oder passive Sicherheit bereitstellt, wobei zur Verhinderung eines Modell-Diebstahl-Angriffes
- das Steuerungssystem ein erfindungsgemäßes Computerprogramm ausführt,
- ein computerlesbarer Datenträger, auf dem das erfindungsgemäße Computerprogramm gespeichert ist, mit dem Steuerungssystem Daten übertragend verbunden und das erfindungsgemäße Computerprogramm ausgeführt wird oder
- das Steuerungssystem ein Datenträgersignal, das das erfindungsgemäße Computerprogramm überträgt, empfängt und das erfindungsgemäße Computerprogramm ausführt.

Nach einem weiteren Aspekt stellt die Erfindung ein System zur Verhinderung von Modell-Diebstahl-Angriffen bereit, das System umfassend
- Eingangsschnittstellen, über die das System Eingangsdaten für ein Regelungs- und/oder Steuerungs-Softwaresystem erhält,
- eine Recheneinheit, die ausgeführt ist, das erfindungsgemäße Verfahren und/oder ein erfindungsgemäßes Computerprogramm auszuführen, um Anomalien zu erkennen, wobei das Computerprogramm in einem Speicher der Recheneinheit gespeichert ist und/oder das System eine Datenschnittstelle umfasst, über die ein erfindungsgemäßer computerlesbarer Datenträger und/oder ein erfindungsgemäßes Datenträgersignal empfangen wird,
- einen Speicher, in den die erkannten Anomalien gespeichert sind, und
- eine Ausgabeschnittstelle, um die erkannten Anomalien bereitzustellen.

Vorteilhafte Ausgestaltungen der Erfindung ergeben sich aus den Definitionen, Unteransprüchen, der Zeichnung und der Beschreibung bevorzugter Ausführungsbeispiele.

Modell-Diebstahl-Angriff, auch model stealing attack genannt, bedeutet, dass ein Angreifer Parameter und/oder Funktionalität eines Softwaresystems, beispielsweise eines Maschinenlern-Modells, ableiten kann, in dem er Eingangsdaten umfassend einen Abfrageinhalt, auch querry genannt, Ausgangsdaten und/oder weitere Informationen, beispielsweise zu Software-/Netzwerktyp und/oder Struktur, des Softwaresystems analysiert. Durch geschicktes Kombinieren verschiedener Eingangsdaten und testen, wie das Softwaresystem darauf reagiert, werden durch solche Angriffe Informationen darüber gesammelt, wie das Softwaresystem funktioniert und/oder wie sie getäuscht werden kann.

Nach einem Aspekt der Erfindung werden von einem Angreifer veränderte Eingangsdaten, die der Angreifer versucht in das Softwaresystem einzuspielen um anschließend die Ausgangsdaten zu beobachten, in der Anomalie-Erkennung erkannt. Veränderte Eingangsdaten umfassen Störungen, die über Schnittstellen umfassend Programmierschnittstellen, auch application programming interfaces, abgekürzt API, genannt, beispielsweise über APIs einer Steuerelektronik auf einem elektronischen Prüfstand, und Fahrerassistenz-Schnittstellen, auch advanced driver assistance system interface specification, abgekürzt ADASIS, genannt, von dem Angreifer in das Softwaresystem eingespielt werden.

Nach einem weiteren Aspekt der Erfindung werden veränderte Eingangsdaten durch Störungen in der Umwelt erhalten, insbesondere wenn der Angreifer keinen Zugriff auf Schnittstellen des Softwaresystems hat, beispielsweise wenn die Eingangsdaten verschlüsselt oder verifiziert werden, bevor sie von dem Softwaresystem weiterverarbeitet werden. In diesem Fall kann der Angreifer Störsignale beispielsweise in Form von Aufklebern, von Audiodaten und/oder von Laserlicht auf Objekten, die von Sensoren des Fahrsystems erfasst werden, aufbringen, beispielsweise auf Verkehrsschildern, Karosserieteilen, Untergrund oder Rollenprüfstand. Auch diese Störungen werden in der Anomalie-Erkennung erkannt.

Das erfindungsgemäße System zur Verhinderung von Modell-Diebstahl-Angriffen hat den Vorteil, dass es einem Angreifer durch die Anomalie-Erkennung auf den Eingangsdaten die Informationsgewinnung über das Softwaresystem erschwert. Damit wird auch das Verstehen und damit auch Kopieren von Funktionalitäten des Softwaresystems erschwert. Ferner erschwert die Erfindung einem Angreifer schädigende Störungen zu generieren, um eine korrekte Funktionalität des Softwaresystems während eines Betriebs zu verhindern. Damit werden ebenfalls vom Angreifer ausgehende Erpressungs-, Sabotage- und Rufschädigungs-Versuche vereitelt.

Ein Softwaresystem ist ein technisches System oder Subsystem, dessen Funktionalität mittels Software realisiert ist. Softwaresysteme umfassen Bedienschnittstellen, Ein- und/oder Ausgabeschnittstellen und Programmierschnittstellen. Nach einem Aspekt der Erfindung ist das Softwaresystem in das Fahrsystem zur Steuerung und/oder Regelung eines Antriebs umfassend Getriebesteuerung, eines automatisierten Betriebs des Fahrsystems umfassend einen assistierten und autonomen Betrieb und/oder von aktiven und/oder passiven Sicherheitssystemen des Fahrsystems umfassend Bremse, Rückhaltegurte und Airbags eingebettet. Der grundlegende Gedanke der Erfindung ist auf jegliche Softwaresysteme anwendbar. Dabei ist die exakte Umsetzung des Softwaresystems, welches zur Steuerung benutzt wird, nicht relevant.

Das Softwaresystem ist nach einem Aspekt der Erfindung ein traditionelles, geregelte System mit geregelter, prozessualer Entscheidungsaufgabe. Nach einem weiteren Aspekt der Erfindung ist das Softwaresystem ein datengetriebenes System, welche angelernt wird, beispielsweise mithilfe von deep neural networks und reinforcement learning. Auch beliebige Kombinationen solcher Systeme sind vorstellbar und werden durch die Erfindung abgesichert.

Vor allem datengetriebene Systeme, welche maschinell gelernt werden, beispielsweise auf Basis von deep neural networks, sind sehr anfällig gegen Angriffe und müssen dagegen geschützt werden. Dies beinhaltetet einerseits die Steigerung der Robustheit gegen gezielt berechnete Störsignale, um weiterhin eine korrekte Funktionalität zu gewährleisten, auch wenn die Eingangsdaten gestört sind. Andererseits ist der grundlegende Schritt zu verhindern, dass sich die Systeme ausspähen lassen und ein Angreifer/Konkurrent Informationen gewinnen kann, welche die gezielten Angriffe erst ermöglichen. Das hauptsächliche Ziel der Erfindung ist es den zuletzt genannten Punkt zu lösen und die Ausspähung zu verhindern. Sollte dies dennoch gelingen, kann auch der erste Punkt durch die Erfindung verhindert werden und die Robustheit des Systems gegen Störangriffe erhöht werden.

Erfindungsgemäß werden black-box-Angriffe verhindert. Ein Softwaresystem oder ein Maschinenlern-Modell ist eine black-box, wenn der Benutzer oder Angreifer nur über Abfrageinhalte von Eingangs- und Ausgangsdaten Zugang zu dem Modell oder System hat. Die black-box kann zudem beispielsweise durch Verschlüsselung und weitere Cybersecurity-Maßnahmen soweit geschützt ist, dass ein Angreifer keinen Zugriff auf Daten innerhalb des Systems erhalten kann. Innerhalb des geschützten Systems können verschiedene Verarbeitungs- und Interpretationsschritte durchlaufen werden, auf welche der Angreifer keinen Zugriff hat. Das Ziel des Angreifers ist es nun Informationen über die internen Prozesse, Entscheidungen und/oder Funktionen innerhalb des Softwaresystems zu erhalten. Dieses wird durch die Erfindung verhindert, indem verschiedene Maßnahmen durchgeführt werden.

Das Fahrsystem umfasst Landfahrzeuge, Wasserfahrzeuge und Luftfahrzeuge. Nach einem Aspekt der Erfindung ist das Fahrsystem ein automatisiertes Straßenfahrzeug, beispielsweise ein PKW, Bus, People Mover oder LKW.

Hardwareteile des Fahrsystems umfassen Aktuatoren, beispielsweise Aktuatoren für Antriebssteuerung, Getriebesteuerung, eines Fahrerassistenzsystems, eines automatisierten Fahrsystems und/oder eines aktiven und/oder passiven Sicherheitssystems.

Die punktuelle Auswertung einzelner Datenpunkte umfasst eine univariate Anomalie-Erkennung, das heißt eine Anomalie-Erkennung in einer einzelnen Datendimension, und eine multivariate Anomalie-Erkennung, das heißt eine Anomalie-Erkennung in mehreren Dimensionen. Die multivariate Anomalie-Erkennung hat den Vorteil, dass auch komplexere Anomalien erkannt werden. Beispielsweise würde bei einer Erkennung von Kindern weder eine Größe von 1,70m noch ein Gewicht von 20kg sonderlich aus dem Rahmen fallen. Eine univariate Anomalie-Erkennung in Größe und eine univariate Anomalie-Erkennung in Gewicht würde jeweils keine Anomalie erkennen, da ein 10 jähriges Kind 20kg wiegen kann und ein 16 jähriges Kind 1,70m groß sei kann. Die Kombination beider Datenpunkte bei einem Kind wird in einer multivariaten Anomalie-Erkennung als Anomalie erkannt.

Bei einer kontextuellen Anomalie-Erkennung fallen Datenpunkte erst auf, wenn sie in einem größeren Zusammenhang gesehen werden. Beispielsweise schwankt der Betrieb eines People Movers erheblich zwischen Tag und Nacht. Ein hohes Datenvolumen, das während des täglichen Betriebs üblich, also normal, ist, kann nachts ein Indiz für einen Modell-Diebstahl-Angriff sein. In diesem Beispiel liegt eine sicherheitsrelevante kontextuelle Anomalie vor, die durch die Erfindung erkannt wird.

Bei einer kollektiven Anomalie sind einzelne Datenpunkte nicht auffällig. Stattdessen ergibt sich erst in der Betrachtung einer Datengruppe eine Auffälligkeit.

Bei Zeitreihen liegen neben univariaten oftmals auch kontextuelle oder kollektive Anomalien vor. Nach einem Aspekt der Erfindung werden mittels Zeitreihen zukünftige Anomalien erkannt, denn eine Zeitreihe ermöglicht ein Fortschreiben der Zeitreihe in die Zukunft im Rahmen von Predictive Analytics. Hierzu werden nach einem Aspekt der Erfindung statistische Verfahren oder Maschinenlern-Algorithmen wie neuronale Netze, insbesondere long-short-term-memory-Netzwerke, verwendet. Nach einem weiteren Aspekt der Erfindung werden die vorhergesagten Werte und ihre Konfidenzintervalle als Definition von Normalität verwendet, um Anomalien beim Auftreten zu erkennen.

Nach einem Aspekt der Erfindung entsprechen die Zeitreihen einer Sequenz von vergangenen Eingangsdaten. Damit wird die Anomalie-Erkennung verbessert, da die Struktur der normalen Eingangsdaten stark von den aktuellen Gegebenheiten beeinflusst werden kann. Durch die Nutzung von zeitlichen Informationen kann die Anomalie-Erkennung besser unterscheiden, ob die aktuellen Eingangsdaten tatsächlich manipuliert worden sind, oder sich die normale Nutzung grundlegend geändert hat, beispielsweise anderes Fahrverhalten, Gelände, Wetter. Folglich kann die True Positive Rate verbessert werden und weniger Overhead ist vorhanden, die verdächtigen Fälle manuell zu überprüfen und eventuell weitere juristische Schritte einzuleiten.

Nach einem weiteren Aspekt werden die rohen Eingangsdaten zuerst in einen verkürzten Informationsvektor eingebettet. Dieser Vektor enthält dann möglichst alle relevanten Informationen der Sequenz und ist ausreichend, um die Sequenz zu analysieren. Durch die verkürzte Darstellung wird die Analyse erleichtert, da die Dimensionalität verringert ist und unwichtige Informationen nicht benutzt werden. Auf den gesamten eingebetteten Eingangsdaten wird dann die Anomalie-Erkennung durchgeführt, um die gesehene Sequenz den beschriebenen Betriebsarten zuzuweisen. Um einen solchen eingebetteten Informationsvektor zu generieren, stehen verschiedene Techniken zur Verfügung. Diese reichen über einfache Regeln, beispielsweise formales Mapping, zu komplexen Techniken, beispielsweise Einsatz von long-short-term-memory Netzwerken. Welche Methode für den jeweils vorliegenden Fall am besten geeignet ist, hängt vollständig von der Struktur / dem Typ der Daten ab. Folglich wird das eingesetzte Verfahren abhängig von den konkreten Eingangsdaten ausgewählt werden.

Die voran genannten Varianten sind Beispiele, um die Erkennung verschiedener Fälle von Betriebsarten anhand der Eingangsdaten des Systems durchzuführen. Die Erfindung ist nicht von diesen abhängig und funktioniert auch mit anderen Methoden, welche zur Anomalie-Erkennung in den Eingangsdaten benutzt werden können.

Im Falle einer erkannten Anomalie werden erfindungsgemäß Maßnahmen eingeleitet, um zu verhindern, dass der Angreifer erfolgreich Informationen über die Funktionalität des verwendeten Softwaresystems gewinnen kann.

Dokumentation des Angriffes ermöglicht es die Erfindung, im Nachhinein nachzuvollziehen, bei welchen Hardwareteilen und welchen Umständen der Angriff durchgeführt wurde. Dadurch können eventuelle Schadensersatzansprüche besser begründet werden und Verantwortliche für einen Unfall, im Fall das ein Angreifer gezielt eine Störung berechnet, welche zu einem Fehlverhalten des Systems führt, gefunden werden. Nach einem Aspekt der Erfindung wird die Dokumentation in einem gesicherten und/oder verschlüsselten Speicherbereich des Softwaresystems oder Fahrsystems gespeichert und/oder an einen Cloud-Speicher gesendet und dort gespeichert.

Durch Ändern der Funktionsweise des Softwaresystems gewinnt der Angreifer keine Informationen über das aktuelle Softwaresystem. Es werden dem Angreifer plausible Ausgangsdaten geliefert, so dass der Angreifer die laufende Verteidigungsmaßnahmen des Softwaresystems nur schwer feststellen kann. Außerdem sind dadurch eventuell berechnete Störsignale für das eigentlich aktuelle Softwaresystem unschädlich.

Eine weitere Maßnahme ist das Einbringen eines Software-Wasserzeichens in das Softwaresystem als Nachweisfunktion. Beispielsweise wird das Wasserzeichen in den Ausführungspfad des Softwaresystems eingebracht und beim Ausführen der Software extrahiert. Beispielsweise werden nach einem Aspekt der Erfindung sehr kleine Teilfunktion auf eine deutlich andere Art durchgeführt werden, als es typischerweise getan wird. Ein Angreifer wird dadurch nicht misstrauisch, aber es kann klar bewiesen werden, dass eine Spionage vorlag, wenn der Angreifer plötzlich anfängt in seinen Produkten ähnliches Verhalten aufzuweisen.

Ausführen des Softwaresystems in einem Notlauf-Betrieb, beispielsweise false safe, und/oder Deaktivierung des Softwaresystems ist der radikalste Schritt, einen Angreifer abzuwehren. In einer abgeschwächten Form kann dies in der Weise passieren, dass ein Neustart des Systems verhindert wird und nicht wieder möglich ist. Alle diese Maßnahmen könnten von einem rechtschaffenden Nutzer auf Antrag bzw. durch einen bestimmten Prozess wieder aufgehoben werden. Bei diesem Prozess würde sichergestellt werden, dass tatsächlich kein Angriff / Fehlverhalten des Nutzers vorlag.

Die voran genannten Maßnahmen zur Abwehr eines Angriffes können erfindungsgemäß alleinstehend oder zusammen in beliebigen Kombinationen vorgenommen werden. Nach einem Aspekt der Erfindung ist wenigstens ein Zeitpunkt, zu dem wenigstens eine der Maßnahmen aktiv wird, frei gestaltbar und orientiert sich an den Notwendigkeiten. Die genannten Maßnahmen sind Beispiele, um zu verhindern, dass ein Angreifer relevante Informationen über den aktuellen Stand der Funktionsweise eines Softwaresystems erlangen kann, oder ein Softwaresystem täuschen kann. Die Erfindung hängt nicht von einer konkreten Maßnahme ab, sondern beschreibt das Konzept, welches unabhängig von der konkret genutzten Technik ist.

Nach einem weiteren Aspekt der Erfindung wird die Anomalie-Erkennung vor Einspeisen der Eingangsdaten in das Softwaresystem oder parallel zur Auswertung der Eingangsdaten durch das Softwaresystem durchgeführt wird. In der vorgeschalteten Architektur der Anomalie-Erkennung vor Einspeisen der Eingangsdaten in das Softwaresystem werden die Eingangsdaten analysiert, bevor sie von dem Softwaresystem verarbeitet werden. Dadurch kann ein Angriff erkannt werden, bevor die Eingangsdaten in das Softwaresystem eingespeist werden, und Gegenmaßnahmen eingeleitet werden. Die Durchführung der Anomalie-Erkennung parallel zur Auswertung der Eingangsdaten hat den Vorteil, dass keine nicht tolerierbaren Latenzzeiten entstehen.

Nach einem weiteren Aspekt wird zur Erkennung von Ausreißern
- eine Wahrscheinlichkeit, einen oder mehrere der Datenpunkte aus einem an die Eingangsdaten angepassten statistischen Modell zu generieren, bewertet,
- jeder der Datenpunkte in einem Kontext seiner Umgebung und/oder der Ähnlichkeit zu anderen der Datenpunkte durch Ausführen eines Abstands- und Dichte-Algorithmus bewertet,
- aus einer Menge von ähnlichen Datenpunkten eine gegebene Anzahl von Gruppen durch Ausführen eines Cluster-Algorithmus gebildet,
- eine Zugehörigkeit eines der Datenpunkte zu einer Klasse durch Ausführen eines Maschinenlernalgorithmus, der auf den Eingangsdaten trainiert wurde, bestimmt,
- die Datenpunkte in eine niedrigere Dimensionalität abgebildet,
- ein Vergleich mit hinterlegten Ausreißern durchgeführt wird und/oder
- Entscheidungsregeln angewendet.

Die statistischen Modelle sind hierbei geeignet gewählt und gegebenenfalls parametrisiert.

Liegt für einen Datenpunkt eine hinreichend große Menge ähnlicher Daten vor, so bewertet das Abstands- und Dichte-Verfahren den Datenpunkt als normal.

Bei dem Clustering-Verfahren wird nach einem Aspekt der Erfindung ein Maschinenlern-Modell verwendet, um die Daten in Gruppen einzuteilen. Datenpunkte, die von allen Gruppen weit entfernt sind, werden als Ausreißer identifiziert. Reale Clustering-Algorithmen werden nach einem Aspekt der Erfindung anhand von Trainingsdaten optimiert, indem Eingangsdaten des Normalbetriebs aufgenommen werden und bei einigen anderen Eingangsdaten mögliche Angriffs- oder Problemfälle wiedergespiegelt werden. Dadurch kann der Clustering Algorithmus trainiert werden, nicht normale Eingangsdaten zu erkennen und in andere Cluster einzuordnen, welche dann dem Angriffsfall oder auch verschiedenen Störungsfällen zugewiesen werden. Wenn nun während des echten Betriebs Eingangsdaten mit höherer Wahrscheinlichkeit einem anderen Cluster zugewiesen werden, können entsprechende Maßnahmen ergriffen werden und das Softwaresystem geschützt werden. Weiterhin können diese Algorithmen während des Betriebs nachtrainiert und geupdated werden, um sie an den aktuellen Normalzustand anzupassen. Alle Eingangsdaten, welche während des Betriebs mit hoher Wahrscheinlichkeit dem normalen Cluster zugewiesen werden, können genutzt werden, um den Clustering Algorithmus weiter zu verbessern und an den aktuellen Nutzungsfall finezutunen. Dadurch kann die False Positive Rate verringert werden und der Aufwand für manuelle Nachkontrolle reduziert werden.

Bei den klassenbasierte Verfahren wird ein Maschinenlern-Klassifikator mit den Trainingsdaten trainiert, um die Zugehörigkeit eines Datenpunktes zu einer Klasse vorherzusagen. Mit klassenbasierten Verfahren werden typischerweise höhere Erkennungsraten erzielt, weil der Maschinenlern-Klassifikator die Eingangsdaten detaillierter unterscheiden kann und nicht gezwungen wird, formal definierte Cluster zu bilden.

Datenpunkte, die beim Abbilden in eine niedrige Dimensionalität schlecht abgebildet werden können, gelten als Anomalie.

Bei dem Vergleich mit hinterlegten Ausreißern wird beispielsweise auf eine interne Datenbank des System zur Verhinderung von Modell-Diebstahl-Angriffen zugegriffen, in der schon typische Angriffsmuster abgelegt sind und ein Vergleich mit diesen ausreicht, um zu erkennen, dass es sich hierbei um solch ein Muster oder vergleichbares handelt. Diese Datenbank wird nach einem Aspekt der Erfindung über eine drahtlose Verbindung stets auf einem aktuellen Stand gehalten werden.

Die Entscheidungsregeln werden benutzt, um einen Betriebsfall zu detektieren. So sind etwa sehr exakt gefahrene Geschwindigkeiten, die wenig natürliche Variationen aufweisen, ein Hinweis darauf, dass sich das Fahrsystem auf einem Rollenprüfstand befindet und nicht in einem normalen Fahrmodus. Auch die schnelle Abfolge von sehr unterschiedlichen Fahrzuständen kann Hinweise auf einen systematischen Angriffsfall geben.

Damit die Erfindung bei einem notwendigen Prüfstandversuch einer regulären Serviceeinrichtung nicht fälschlicherweise einen Angriffsfall erkennt, wird nach einem Aspekt der Erfindung über ein gesichertes Verfahren das System zur Verhinderung von Modell-Diebstahl-Angriffen vorübergehend und in Abstimmung mit dem System-Owner/Hersteller außer Betrieb gesetzt. Dadurch kann die reguläre Wartung durchgeführt werden und anschließend die Absicherung wieder aktiviert werden.

In einer weiteren Ausgestaltung der Erfindung werden die Eingangsdaten in einen
- Normalfall, in dem die Eingangsdaten identisch zu den Eingangsdaten sind, die bei einer regulären Nutzung des Softwaresystems auftreten,
- Angriffsfall, in dem die Eingangsdaten für den Modell-Diebstahl-Angriff verändert sind,
- Problemfall, in dem die Eingangsdaten und/oder Ausgangsdaten auf eine Fehlfunktion und/oder einen Schaden zumindest eines der Hardwareteile hindeuten und
- Störungsfall, in dem die Ausgangsdaten durch den Modell-Diebstahl-Angriff gestört sind,
unterteilt. In dem Angriffsfall und in dem Störungsfall wird die Informationssicherheit des Softwaresystems erfindungsgemäß gesichert.

Damit wird durch Anomalie-Erkennung auch unterschieden, welche der voran genannten Betriebsarten die aktuellen Eingangsdaten wiederspiegeln. Die Unterteilung in die voran genannten Betriebsarten wird insbesondere in Kombination mit der Bildung einer gegebenen Anzahl von Gruppen aus einer Menge von ähnlichen Datenpunkten durch Ausführen eines Cluster-Algorithmus gebildet. Beispielsweise wird in die vier Gruppen Normalfall, Angriffsfall, Problemfall und Störungsfall geclustert.

Im Problemfall wird das Softwaresystem nicht ausspioniert, sodass keine Maßnahmen ergriffen werden müssen, um den Informationsgewinn zu verhindern. Je nach konkretem Problemfall werden nach einem Aspekt der Erfindung alternative Maßnahmen ergriffen, um das Problem zu beheben, beispielsweise Empfehlung Werkstattbesuch oder Neukalibrierung.

Im Störungsfall ist ein Störsignal zum Zweck der Täuschung/Manipulation des Softwaresystems aber auch nur eine Veränderung der Eingangsdaten. Daher kann diese Abweichung als Anomalie genauso erkannt werden, wie im Angriffsfall und mit einer entsprechenden Kombination von Gegenmaßnahmen abgewehrt werden.

Nach einem weiteren Aspekt der Erfindung wird zur Erkennung von Ausreißern ein Nächste-Nachbarn-Klassifikationsalgorithmus, ein k-means-Algorithmus, ein Support-Vector-Machine-Algorithmus, ein Long-Short-Term-Memory künstliches neuronales Netzwerk, ein Autoencoder oder ein Replikator-neuronales-Netzwerk ausgeführt.

Der Nächste-Nachbarn-Klassifikationsalgorithmus, auch k-nearest-neighbor-Algorithmus, abgekürzt kNN, genannt, ist ein Beispiel für das Abstands-Dichte-Verfahren. kNN wird zur Klassifikation und Regression verwendet.

Der k-means-Algorithmus ist ein Clustering-Algorithmus.

Bei dem Autoencoder wird beispielsweise ein Clustering in einem latenten Raum von einem deep neural network gelernt wird, wobei das deep neural network ein Regressionsproblem löst. Bei dem Autoencoder werden die Eingangsdaten typischerweise in einen hidden layer gespeist, der weniger Neuronen hat als die Eingangsschicht. Dadurch wird eine Kompression der Eingangsdaten gelernt.

Replikator-neuronale-Netzwerke speisen die Eingangsdaten durch einen hidden layer mit einer treppenförmigen Aktivierungsfunktion. Durch die treppenförmige Aktivierungsfunktion wird der Ausgabevektor des hidden layers quantisiert in Gitterpunkte und dadurch die Eingangsdaten in eine Anzahl von Clustern geordnet. Replikator-neuronale-Netzwerke sind in S. Hawkins et al., Outlier Detection Using Replicator Neural Networks, https://togaware.com/papers/dawak02.pdf, offenbart.

Nach einem weiteren Aspekt der Erfindung umfasst das Ändern der Funktionsweise des Softwaresystems einen Wechsel auf einen älteren Stand des Softwaresystems, eine Änderung der Konfiguration des Softwaresystems und einen Wechsel zwischen verschiedenen Ständen des Softwaresystems. Der ältere Stand des Softwaresystems unterscheidet sich weit genug von dem aktuellen Stand, so dass der Angreifer keine wertvollen Informationen gewinnt und ihm dennoch plausible Ergebnisse geliefert werden.

Insbesondere wird der Wechsel auf einen älteren Stand des Softwaresystems mit dem Einbringen und Extrahieren des Software-Wasserzeichens kombiniert. Da dieser ältere Softwarestand, in den das Wasserzeichen eingebracht ist, bewusst gewählt wird, um einem Angreifer gezeigt zu werden, wird der Angriff besonders gut nachweisbar. Beispielsweise können sehr kleine Teilfunktion auf eine deutlich andere Art durchgeführt werden, als es typischerweise getan wird.

Wird zwischen mehreren verschiedenen Versionen gewechselt, fällt es dem Angreifer deutlich schwerer, die gewonnen Daten zu interpretieren und daraus gewinnbringende Informationen über die spezifische Funktionsweise der Software abzuleiten. Ein selbständig lernendes Angreifer-System, beispielsweise ein Ersatzsystem, das mit ähnlicher Funktionalität trainiert wurde anhand von Eingabe-Ausgabe Paaren, wird dadurch gegebenenfalls nicht konvergieren. Im besten Fall spiegeln die verschiedenen Softwarevarianten mehrere Fälle wider, welche nahezu optimales Verhalten gewährleisten, sich aber deutlich in ihren Ausgabewerten unterscheiden. In diesem Fall ist es also möglich, dass ein Angreifer misstrauisch wird, weil er stark variierende Ausgabewerte für sehr ähnliche Eingangsdaten sieht und ahnt, dass mit dem System aktuell etwas nicht stimmt und das System nicht im Normalbetrieb funktioniert. Da sich die Ausgabewerte aber deutlich unterscheiden und von vielen verschiedenen Softwareständen stammen, ist es für den Angreifer nicht oder nur sehr schwer möglich die erhaltenen Daten zu interpretieren und daraus relevante Informationen über die spezifische Funktionsweise des Softwaresystems zu gewinnen.

Nach einem weiteren Aspekt der Erfindung werden anormale Eingangsdaten zusammen mit Meta-Informationen umfassend Positionsangaben, Zeitangaben und/oder Hardwareteile-Identifikationsnummern zu Dokumentationszwecken gespeichert. Dies verbessert die Dokumentation und Nachvollziehbarkeit des Angriffes. Positionsangaben sind beispielsweise GPS-Angaben.

Nach einem weiteren Aspekt der Erfindung wird die Anomalie-Erkennung lokal in dem Fahrsystem oder extern umfassend ein Remote-System umfassend eine Cloud durchgeführt. Die erkannte Anomalie wird dem Fahrsystem, einem Fahrer oder Betreiber des Fahrsystems und/oder dem Remote-System bereitgestellt. Damit werden zwei Varianten für das System zur Verhinderung von Modell-Diebstahl-Angriffen bereitgestellt. Beispielsweise wird die Anomalie-Erkennung über eine human machine interface Schnittstelle bereitgestellt.

Erfindungsgemäß umfasst das Softwaresystem ein Maschinenlern-Modell und ein Diebstahl des Maschinenlern-Modells wird verhindert. Maschinenlern-Modelle, beispielsweise auf Basis von deep neural networks, sind besonders anfällig für Angriffe. Beispielsweise reichen in einem Bild bereits wenige gestörte Pixel, beispielsweise Pixel in anderen Farben, aus, um die Inferenz eines künstlichen neuronalen Netzwerks, das als Eingangsdaten Bildaufnahmen erhält und auf Objektklassifizierung trainiert ist, zu stören. Analog reichen bereits menschlich nicht hörbare akustische Signale aus, um die Inferenz eines akustischen Klassifikator-Netzwerks zu stören. Durch die Erfindung wird es verhindert, dass sich das Maschinenlern-Modell ausspähen lässt und ein Angreifer oder Konkurrent Informationen gewinnen kann, welche die gezielten Angriffe erst ermöglichen. Insbesondere verhindert es die Erfindung, dass ein Angreifer Modellparameter und/oder Hyperparameter eines künstlichen neuronalen Netzwerks durch Modell-Diebstahl-Angriffe stehlen kann. Modellparameter umfassen Gewichte für Neuronen-Verbindungen und Aktivierungsfunktionen. Beispielsweise ist in einer objective function L = I + λR eines künstlichen neuronalen Netzwerks I die Verlustfunktion, R ein Regularisationsterm und λ ein Hyperparameter. Der Regularisationsterm verhindert ein overfitting. Der Hyperparameter λ stellt ein, wie gut ein Modell generalisieren kann. Ferner steigert die Erfindung die Robustheit des Maschinenlern-Modells gegen gezielt berechnete Störsignale.

Erfindungsgemäß ist auch eine Verwendung des erfindungsgemäßen Verfahrens bei einem Softwaresystem einer Antriebssteuerung des Fahrsystems umfassend eine Getriebesteuerung, eines Fahrerassistenzsystems, eines automatisierten Fahrsystems und/oder eines aktiven und/oder passiven Sicherheitssystems.

Beispielsweise hat das aktuellste Getriebe ein Update der Software bekommen, um die Funktionalität zu verbessern, zum Beispiel geringerer Spritverbrauch. Ein Konkurrent hat dies über Werbemaßnahmen erfahren, in denen der Hersteller mit der neuen Getriebesoftware den plötzlich geringeren Spritverbrauch als Verkaufsargument nutzt, und muss nun mit seinem eigenen Produkt mitziehen, um die Marktrelevanz nicht zu verlieren. Da eine eigene Entwicklung zu lange dauern würde, soll die neue Getriebesoftware ausspioniert werden, um ein ähnliches Update schneller anbieten zu können.

Bei einem Getriebe, dessen Software nicht durch das erfindungsgemäße System zur Verhinderung von Modell-Diebstahl-Angriffen abgesichert ist, ist es dem Konkurrenten möglich, alle relevanten Informationen zu gewinnen, indem verschiedene Testmuster auf dem Prüfstand ausprobiert werden. Aus den gewonnenen Daten kann die Funktionalität repliziert werden und ein entsprechendes Update der eigenen Software schnell zur Verfügung gestellt werden. Der Technologievorsprung ist von geringer zeitlicher Dauer und es kann nicht nachgewiesen werden, dass der Konkurrent die Software kopiert hat und nicht auf Basis eigener Ideen selbständig entwickelt hat.

Wenn die Steuerungssoftware stattdessen mit dem erfindungsgemäßen System zur Verhinderung von Modell-Diebstahl-Angriffen ausgestattet ist, ist es dem Konkurrenten nicht möglich, die Funktionalität zu kopieren. Das Softwaresystem würde erkennen, dass aktuell auf dem Prüfstand Testmuster abgefahren werden, um Informationen über das System zu erhalten. Folglich würde es anstatt der aktuellen Software eine veraltete benutzen und/oder zwischen verschiedenen Varianten wechseln. Der Konkurrent kann dadurch keine nützlichen Informationen gewinnen und verschwendet sogar Zeit beim Versuch die Funktionalität auszuspionieren. Dadurch wird die zeitliche Spanne sogar noch größer bis ein ähnliches Update bereitgestellt werden kann. Zusätzlich ist die Entwicklung teurer, weil alles eigenständig erforscht und umgesetzt werden muss. Folglich ist der finanzielle Gewinn für den ursprünglichen Entwickler des Softwareupdates größer, da die Alleinstellung länger vorhanden ist.

Falls der Konkurrent sich dennoch entscheiden sollte, einfach stumpf die Software zu kopieren, würde er einerseits einen schlechten/alten Softwarestand kopieren and andererseits auch die eingebauten Wasserzeichen mitkopieren. Dadurch kann im Nachgang bewiesen werden, dass eine Spionage stattgefunden hat und als Konsequenz können Ansprüche, Forderungen gestellt werden.

Als weiteres Beispiel hat ein Angreifer das Ziel, eine Störung eines ADAS Systems durchzuführen. Ein Stopp-Schild soll durch aufbringen eines Aufklebers, welcher für einen Menschen unverdächtig wirkt, so manipuliert werden, dass das ADAS System das Stopp Schild nicht erkennt und stattdessen ein Tempo 100 Schild erkennt. Durch diese Manipulation möchte der Angreifer einen schweren Unfall verursachen. Sobald dies passiert ist, wird ein Erpresserschreiber an den Hersteller der Software geschickt, in dem mit weiteren solchen Angriffen gedroht wird, wenn nicht eine hohe Gegenzahlung getätigt wird. Der Hersteller der ADAS-Software erleidet einerseits einen erheblichen Imageschaden und außerdem einen großen finanziellen Verlust.

Um einen solchen Angriff durchführen zu können, muss der Angreifer zuerst ein passendes Störsignal, das ist der Aufkleber, berechnen. Dazu benötigt er Informationen über das ADAS-System, um ein spezifisches Störsignal berechnen zu können. Daher führt er zuerst einen Angriff zur Informationsbeschaffung durch, indem er gezielt, verschiedene Störungen ausprobiert, und gewinnt dadurch Informationen, wie das Softwaresystem gegenüber gestörten Eingangssignalen reagiert. Hierzu kann der Angreifer zum Beispiel ein Fahrzeug auf einen Rollenprüfstand bringen und dort einer ADAS-Kamera des Fahrzeuges viele unterschiedliche Stopp-Schilder mit kleinen Modifikationen zeigen bis sich die gewünschte Reaktion im System zeigt.

Bei einem ADAS-System, welches durch das erfindungsgemäße System zur Verhinderung von Modell-Diebstahl-Angriffen geschützt ist, ist ein solcher Angriff nicht möglich. Der Angreifer hätte es nicht geschafft, Informationen über die Funktionsweise des Systems zu gewinnen und daher hätte ein solcher Aufkleber nicht generiert werden können. Es wäre zu keiner Erpressung gekommen, wodurch der Hersteller der ADAS-Software keinen Schaden, weder Image noch wirtschaftlich, erlitten hätte. Weiterhin würden die Daten zu dem versuchten Angriff zur Beschaffung von Informationen über die Funktionsweise des ADAS-Systems in der Cloud gespeichert werden. Dies kann genutzt werden, um Anzeige gegenüber der Polizei zu erstatten und etwaige Schadensforderungen abzuweisen. Außerdem kann die Erkennung von ähnlichen Angriffen noch weiter verbessert werden, indem das System zur Angriffserkennung auf den neuen Daten weiter trainiert wird.

Die Befehle des erfindungsgemäßen Computerprogramms umfassen Maschinenbefehle, Quelltext oder Objektcode geschrieben in Assemblersprache, einer objektorientierten Programmiersprache, beispielsweise C++, oder in einer prozeduralen Programmiersprache, beispielsweise C. Das Computerprogramm wird ganz oder teilweise auf dem Fahrsystem oder in dem Remote-System umfassend eine Cloud ausgeführt.

Ein weiterer Aspekt der Erfindung ist ein computerlesbarer Datenträger zur Verhinderung eines Modell-Diebstahl-Angriffes, auf dem das erfindungsgemäße Computerprogramm gespeichert ist. Der computerlesbare Datenträger ist beispielsweise ein random access memory Speicher, ein Nur-Lese-Speicher, ein Flash Speicher, ein USB-Stick, eine SD-Karte, eine CD, DCD oder BluRay. Falls das Fahrsystem bei Auslieferung nicht mit dem erfindungsgemäßen System zur Verhinderung von Modell-Diebstahl-Angriffen ausgestattet ist, kann es mittels des computerlesbaren Datenträgers nachgerüstet werden.

Ein weiterer Aspekt der Erfindung ist ein Datenträgersignal zur Verhinderung eines Modell-Diebstahl-Angriffes. Das Datenträgersignal überträgt das erfindungsgemäße Computerprogramm. Durch das Datenträgersignal kann das Computerprogramm heruntergeladen werden, beispielsweise über ein Netzwerk, beispielsweise über das Internet, mittels Funktechnologie, beispielsweise WLAN.

Die Steuergeräte des erfindungsgemäßen Steuerungssystems umfassen elektronische Steuergeräte, auch electronic control units genannt.

Die Sensoren des Fahrsystems umfassen Sensoren einer Getriebesteuerung, beispielsweise Drucksensoren, Umfelderkennungssensoren, beispielsweise Kamera, Lidar, Radar, Mikrofone, und weitere Fahrsystem-Sensoren, beispielsweise Beschleunigungssensoren. Die Sensordaten werden dann innerhalb des Softwaresystems weiterverarbeitet, transformiert und durchlaufen dabei verschiedene Schritte. Typischerweise werden die rohen Sensordaten zuerst vorverarbeitet, um die Qualität der Eingangsdaten zu steigern und anschließend analysiert und auf Basis dessen die Ausgabe generiert. Diese letzten beiden Schritte werden nach einem Aspekt der Erfindung durch ein geregeltes System oder durch ein angelerntes System durchgeführt. Als Ausgangsdaten generiert das Softwaresystem Werte, welche zur Ansteuerung von Hardware benutzt werden, zum Beispiel Getriebesteuerung, oder über Hardware ausgegeben werden, um einem Benutzer angezeigt zu werden, zum Beispiel smarte Rückfahrkamera.

Mögliche Punkte, an denen ein Angreifer angreifen kann, sind Einspeisung der Sensordaten in das Softwaresystem vor oder nach der Vorverarbeitung und nach der Generierung der Ausgangsdaten. Der Angriff kann durch die Veränderung der physikalischen Umwelt oder durch die Manipulation von Sensoren oder Sensordaten, welche nicht Teil des Fahrsystems sind, erfolgen.

Das erfindungsgemäße System ist teilweise oder vollständig Cloud basiert.

Die Erfindung wird in den folgenden Ausführungsbeispielen verdeutlicht. Es zeigen:
Fig. 1 eine schematische Darstellung eines Modell-Diebstahl-Angriffes,
Fig. 2 ein Ausführungsbeispiel eines Softwaresystems, welches durch die Erfindung vor Modell-Diebstahl-Angriffen geschützt wird,
Fig. 3 ein Ausführungsbeispiel von Eingangsdaten für verschiedene Betriebsarten eines des Softwaresystems aus Fig. 2,
Fig. 4 ein Ausführungsbeispiel eines erfindungsgemäßen Systems zur Verhinderung von Modell-Diebstahl-Angriffen,
Fig. 5 eine schematische Darstellung eines Clusterings von Eingangsdaten,
Fig. 6 eine schematische Darstellung eines Wechsel zwischen verschiedenen Softwareständen und
Fig. 7 eine schematische Darstellung des erfindungsgemäßen Verfahrens.

In den Figuren bezeichnen gleiche Bezugszeichen gleiche oder funktionsähnliche Bezugsteile. Übersichtshalber werden in den einzelnen Figuren nur die jeweils relevanten Bezugsteile hervorgehoben.

Das Ziel fremde Produkte auszuspähen und kopieren zu wollen, ist weit verbreitet und für manche Unternehmen zu einem eigenen Geschäftsmodell geworden. Ein Angreifer A mit Wissen über das spezifische Softwaresystem S ist zu solchen Taten fähig, indem er Eingangsdaten E des Softwaresystems S absichtlich und gezielt leicht verändert. Dazu muss kein physikalischer Kontakt zu den Kabeln oder Schnittstellen bestehen. Es reicht, wenn der Angreifer A Störsignale, beispielsweise Aufkleber, Audio oder Laserlicht, auf Objekten aufbringt, welche von Sensoren benutzt oder ausgelesen werden.

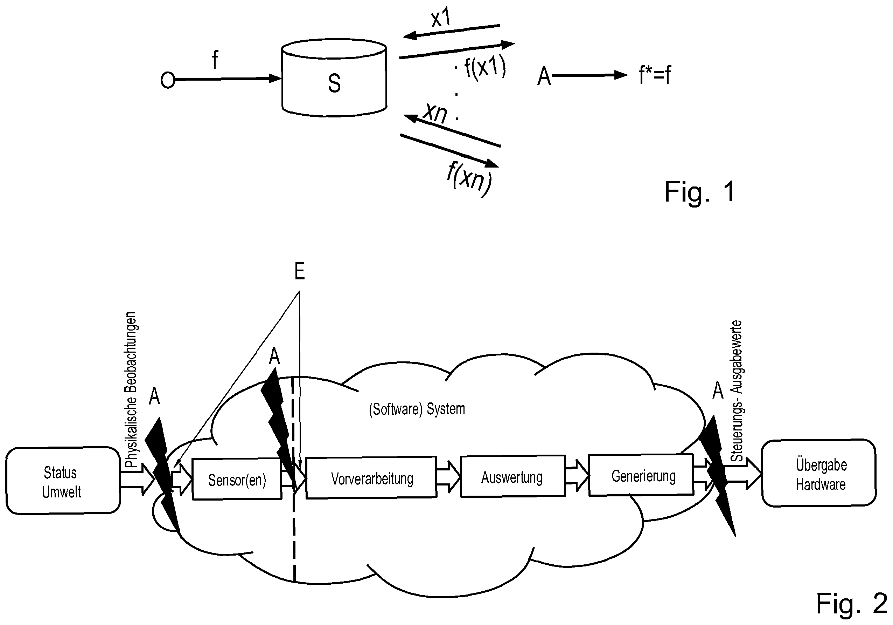

Um ein Verständnis des Softwaresystems S eines Eigentümers O zu erhalten, insbesondere über ein Maschinenlern-Modell f des Eigentümers O, nutzt Angreifer A die Möglichkeit zu beobachten, welche Änderungen in den Ausgangsdaten durch eine gezielte Veränderung der Eingangsdaten E hervorgerufen werden. Durch wiederholtes Zeigen gezielt manipulierter Daten x1, .., xn und Analyse der Ausgangsdaten f(x1), ..., f(xn) können so Rückschlüsse über die Funktionsweise des Softwaresystems S erzielt und ein Modell-Diebstahl f*=f durchgeführt werden, siehe Fig. 1.

Das Vorgehen bei einem Angriff, der darauf abzielt Informationen über das Softwaresystem zu gewinnen und dabei die Eingangssignale gezielt verändert, um den Effekt auf die Ausgangsdaten zu beobachten, kann in folgenden Punkten unterschieden werden:
- Angriffspunkt bei der Aufbringung der Störung
   o physikalisches Medium -> Schild, Untergrund, Karosse, Rollenprüfstand, etc.
   o synthetisch durch Schnittstellen/API der Steuerelektronik -> elektronischer Prüfstand
   o externe Leitungen/Busse -> Einbringen von Hardwarebauteilen, welche Störsignale senden
   ∘ interne Leitungen/Busse -> durch Annahme ausgeschlossen, das System ist in sich geschlossen geschützt / verschlüsselt
- Ziel der Informationsgewinnung
   o Verstehen prinzipielle Funktionalität
   o exaktes Kopieren der Funktionalität
   o Generierung schädigender Störungen (Adversarial Examples), um korrekte Funktionalität während des normalen Betriebs zu verhindern
      ▪ Erpressung
      ▪ Sabotage
      ▪ Rufschädigung
- Durchführung des Angriffs
   o Prüfstand (2 Arten von Prüfständen, elektronischer und mechanischer) -> schnell, verschiedene (mehr oder weniger realistische) Testmuster ausprobieren
   o Reale Tests in manipuliertem physikalischen Gelände -> zeitaufwändig, reale Testmuster
- Art des Angriffs
   o Ersatzsystem mit ähnlicher Funktionalität trainieren (anhand von Eingabe-Ausgabe Paaren), welches dann detailliert analysiert / genutzt werden kann, da Struktur bekannt ist
- Struktur des zu Grunde liegenden Softwaresystems
   o geregelte Entscheidungsausgabe -> traditionelle Steuerungssoftware
   o erlernte Entscheidungsausgabe -> moderne maschinelle Verfahren
   o kombinierte Systeme
   o weitere Komponenten, zum Beispiel Vorverarbeitung mit feststehenden mathematischen Verfahren, Regeln, zum Beispiel Fourier-Transformation, Filter, Normalisierung

Diese so ausgestalteten Angriffe werden durch das erfindungsgemäße System SVMA zur Verhinderung von Modell-Diebstahl-Angriffen verhindert.

Fig. 2 zeigt ein beispielhaftes Softwaresystem S, das durch das erfindungsgemäße Verfahren vor Modell-Diebstahl-Angriffen geschützt ist. Das Softwaresystem S umfasst ein Eingangsmodul, über das Eingangsdaten E von Sensoren eingelesen werden. Die Sensoren können Teil des Eingangsmoduls sein. Ferner umfasst das Softwaresystem S ein Vorverarbeitungsmodul, in dem die rohen Eingangsdaten E vorverarbeitet werden, beispielsweise gefiltert oder abstrahiert. Außerdem umfasst das Softwaresystem S ein Auswertungsmodul, in dem die Eingangsdaten E beispielsweise hinsichtlich auf Objekterkennung ausgewertet werden. Des Weiteren umfasst das Softwaresystem S ein Generierungsmodul, in dem die Ausgangsdaten generiert werden, beispielsweise Regelungs- und/oder Steuerungssignale für Aktuatoren einer Antriebssteuerung, einer Getriebesteuerung, eines Fahrerassistenzsystems, eines automatisierten Fahrsystems und/oder eines aktiven und/oder passiven Sicherheitssystems. Dabei ist die exakte Umsetzung des Softwaresystems S für die Anwendung des erfindungsgemäßen Verfahrens unwichtig.

Der Angreifer A hat keinen Zugriff auf Daten / Parameter innerhalb des geschlossenen Softwaresystems S. Es ist ihm lediglich möglich, Eingangsdaten E und Ausgangsdaten zu beobachten. Dabei bekommt das Softwaresystem als Eingabe Signale, welche den aktuellen Status der relevanten Teile der Umwelt eines Fahrsystems darstellen. Diese Signale können bereits von einem oder mehreren Sensoren aufgenommen worden sein und der Angreifer A spielt beispielsweise gefälschte Karteninformationen, über fixe Navis außerhalb des Fahrsystems oder HD live Maps ein. Oder die Sensoren sind Teil des Fahr-/Softwaresystems und beobachten die Umgebung intern, das heißt Verschlüsselung und/oder Verifikation der übertragenen Daten ist gewährleistet, z.B. ADAS mit eigenen Kamerasensoren. In diesem Fall kann der Angreifer A die Störungen nur innerhalb der Umwelt anbringen und nicht auf etwaige Schnittstellen zu dem System. Angriffspunkte auf das Softwaresystem S sind in Fig. 2 angedeutet.

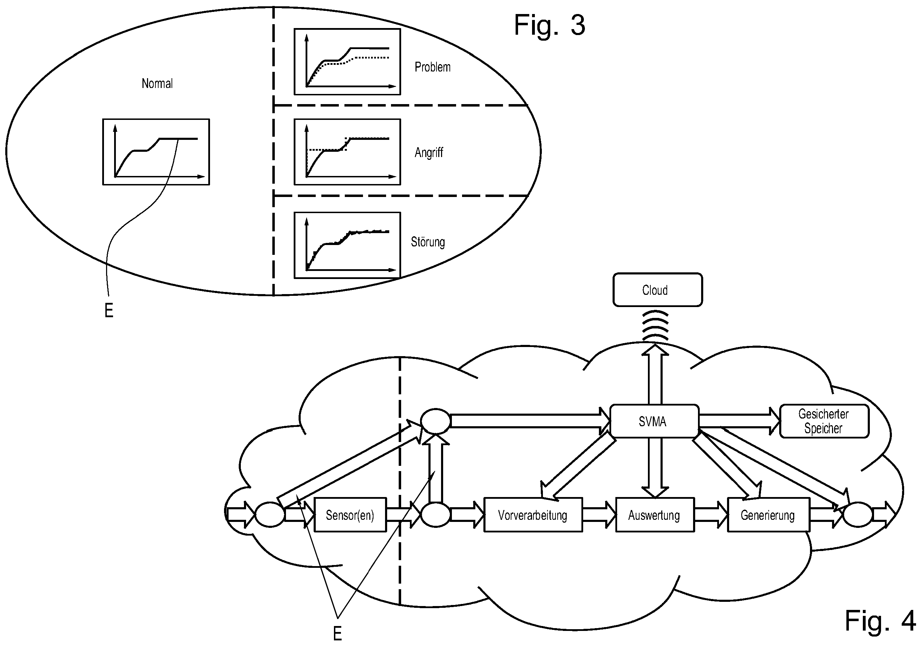

Fig. 3 visualisiert die Eingangsdaten E für die beschriebenen Betriebsarten Normalfall, Problemfall, Angriffsfall und Störungsfall. Die Eingangsdaten E für einen Angriff unterscheiden sich von den Eingangsdaten E im Normalfall, Problemfall und Störungsfall.

Fig. 4 zeigt eine Ausführungsform des erfindungsgemäßen Systems SVMA zur Verhinderung von Modell-Diebstahl-Angriffen. Das System SVMA überwacht die einzelnen Modulen des in Fig. 2 gezeigten Softwaresystems S. Erkannte Anomalien werden in einem gesicherten Speicher des Fahrsystems gespeichert und einem Cloud-Dienst gemeldet. Das SVMA wirkt unabhängig von etwaigen unterschiedlichen Sensoren oder weiteren Komponenten in der gesamten Wirkkette. Die einzige Annahme ist, dass das zu Grunde liegende Softwaresystem S soweit geschützt ist, dass ein Angreifer keinen Zugriff auf Daten innerhalb des Systems erhalten kann.

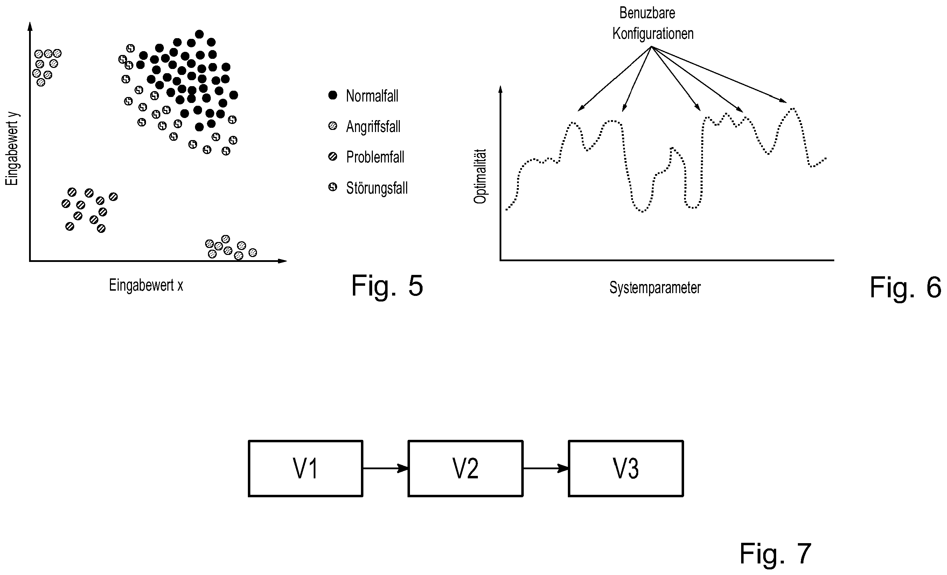

Fig. 5 zeigt ein Clustering der Eingangsdaten zur Anomalie-Erkennung nach den in Fig. 3 beschriebenen Betriebsarten.

In Fig. 6 ist Möglichkeit dargestellt, zwischen verschiedenen Softwareständen zu wechseln. Die Optimalität der Software hängt von verschiedenen Systemparametern ab, welche auch zu unterschiedlichen Ausgangsdaten führen. Durch Wechseln zwischen verschiedenen Optima wird eine gute Funktionalität des Softwaresystems S gewährleistet und ein Angreifer A dennoch verwirrt, da die Ausgangsdaten stark variierend sind.

Das erfindungsgemäße Verfahren ist in Fig. 7 gezeigt. In einem Verfahrensschritt V1 erhält das System SVMA die Eingangsdaten E. In einem Verfahrensschritt V2 wird die erfindungsgemäße Anomalie-Erkennung auf den Eingangsdaten E durchgeführt. Im Falle einer erkannten Anomalie wird in einem Verfahrensschritt V3 die Informationssicherheit des Softwaresystems S erfindungsgemäß gesichert.

### Bezugszeichen

S Softwaresystem
V1-V3 Verfahrensschritte
O Eigentümer
A Angreifer
f Maschinenlern-Modell
x1,..xn Abfrage Eingangsdaten
f* Modell-Diebstahl
E Eingangsdaten
SVMASystem zur Verhinderung von Modell-Diebstahl-Angriffen

## Patentansprüche

1. Computerimplementiertes Verfahren zur Verhinderung eines Modell-Diebstahl-Angriffes auf ein Softwaresystem (S), wobei das Softwaresystem (S) ein Maschinenlern-Modell umfasst und ein Diebstahl des Maschinenlern-Modells verhindert wird, wobei das Maschinenlern-Modell eine black-box ist, zu dem ein Angreifer nur über Abfrageinhalte von Eingangsdaten (E) und Ausgangsdaten Zugang hat und keinen Zugriff auf Daten innerhalb des Systems erhalten kann, wobei das Softwaresystem (S) die Eingangsdaten (E) erhält und die Ausgangsdaten bereitstellt, mit denen das Softwaresystem (S) Hardwareteile umfassend Hardwareteile eines Fahrsystems regelt und/oder steuert, umfassend die Schritte
• Erhalten der Eingangsdaten (E) (V1), wobei in einem Angriffsfall ein Angreifer veränderte Eingangsdaten in das Softwaresystem (S) einspielt um anschließend Ausgangsdaten zu beobachten;
• Durchführen einer Anomalie-Erkennung auf den Eingangsdaten (E) umfassend eine punktuelle Auswertung einzelner Datenpunkte, eine kontextuelle Auswertung mehrerer der Datenpunkte, eine kollektive Auswertung von Gruppen der Datenpunkten und/oder eine Zeitreihen-Auswertung der Datenpunkte, wobei die veränderten Eingangsdaten als Anomalien in Form von Ausreißern von den Datenpunkten umfassend Ausreißer in Datengröße einzelner der Datenpunkte, Ausreißer in Anzahl der Datenpunkte und/oder Ausreißer in einer Abfolge der Datenpunkte erkannt sind (V2),
• wobei zur Erkennung von Ausreißern eine Wahrscheinlichkeit, einen oder mehrere der Datenpunkte aus einem an die Eingangsdaten angepassten statistischen Modell zu generieren, bewertet wird; jeder der Datenpunkte in einem Kontext seiner Umgebung und/oder der Ähnlichkeit zu anderen der Datenpunkte durch Ausführen eines Abstands- und Dichte-Algorithmus bewertet wird; aus einer Menge von ähnlichen der Datenpunkte eine gegebene Anzahl von Gruppen durch Ausführen eines Cluster-Algorithmus gebildet wird; eine Zugehörigkeit eines der Datenpunkte zu einer Klasse durch Ausführen eines Maschinenlernalgorithmus, der auf den Eingangsdaten trainiert wurde, bestimmt wird; die Datenpunkte in eine niedrigere Dimensionalität abgebildet werden, ein Vergleich mit hinterlegten Ausreißern durchgeführt wird und
• im Falle einer erkannten Anomalie Sichern einer Informationssicherheit des Softwaresystems (S) umfassend Dokumentation des Angriffes, Meldung des Angriffes, Ändern der Funktionsweise des Softwaresystems (S), Extraktion eines Wasserzeichens, Ausführen des Softwaresystems (S) in einem Notlauf-Betrieb und/oder Deaktivierung des Softwaresystems (S) (V3).

2. Verfahren nach Anspruch 1, wobei die Anomalie-Erkennung vor Einspeisen der Eingangsdaten (E) in das Softwaresystem (S) oder parallel zur Auswertung der Eingangsdaten (E) durch das Softwaresystem (S) durchgeführt wird.
• .

3. Verfahren nach einem der Ansprüche 1 bis 2, wobei die Eingangsdaten (E) in einen
• Normalfall, in dem die Eingangsdaten (E) identisch zu den Eingangsdaten (E) sind, die bei einer regulären Nutzung des Softwaresystems (S) auftreten,
• Angriffsfall, in dem die Eingangsdaten (E) für den Modell-Diebstahl-Angriff verändert sind,
• Problemfall, in dem die Eingangsdaten (E) und/oder Ausgangsdaten auf eine Fehlfunktion und/oder einen Schaden zumindest eines der Hardwareteile hindeuten und
• Störungsfall, in dem die Ausgangsdaten durch den Modell-Diebstahl-Angriff gestört sind,
unterteilt werden und jeweils in dem Angriffsfall und dem Störungsfall die Informationssicherheit des Softwaresystems (S) gesichert wird.

4. Verfahren nach einem der Ansprüche 1 bis 3, wobei zur Erkennung von Ausreißern ein Nächste-Nachbarn-Klassifikationsalgorithmus, ein k-means-Algorithmus, ein Support-Vector-Machine-Algorithmus, ein Long-Short-Term-Memory künstliches neuronales Netzwerk, ein Autoencoder oder ein Replikator-neuronales-Netzwerk ausgeführt wird.

5. Verfahren nach einem der Ansprüche 1 bis 4, wobei das Ändern der Funktionsweise des Softwaresystems (S) einen Wechsel auf einen älteren Stand des Softwaresystems (S), eine Änderung der Konfiguration des Softwaresystems (S) und Wechsel zwischen verschiedenen Ständen des Softwaresystems (S) umfasst.

6. Verfahren nach einem der Ansprüche 1 bis 5, wobei anormale Eingangsdaten (E) zusammen mit Meta-Informationen umfassend Positionsangaben, Zeitangaben und/oder Hardwareteile-Identifikationsnummern zu Dokumentationszwecken gespeichert werden.

7. Verfahren nach einem der Ansprüche 1 bis 6, wobei die Anomalie-Erkennung lokal in dem Fahrsystem oder extern umfassend ein Remote-System umfassend eine Cloud durchgeführt wird und die erkannte Anomalie dem Fahrsystem, einem Fahrer oder Betreiber des Fahrsystems und/oder dem Remote-System bereitgestellt wird.

8. Verwendung des Verfahrens nach einem der Ansprüche 1 bis 7 bei einem Softwaresystem (S) einer Antriebssteuerung des Fahrsystems umfassend eine Getriebesteuerung, eines Fahrerassistenzsystems, eines automatisierten Fahrsystems und/oder eines aktiven und/oder passiven Sicherheitssystems.

9. Computerprogramm zur Verhinderung eines Modell-Diebstahl-Angriffes auf ein Softwaresystem (S), das Eingangsdaten (E) erhält und Ausgangsdaten bereitstellt, mit denen das Softwaresystem (S) Hardwareteile umfassend Hardwareteile eines Fahrsystems regelt und/oder steuert, umfassend Befehle, die bewirken, dass ein Computersystem, das das Softwaresystem (S) ausführt, die Schritte des Verfahrens nach einem der Ansprüche 1 bis 7 ausführt, wenn das Computerprogramm auf dem Computersystem läuft.

10. Computerlesbarer Datenträger zur Verhinderung eines Modell-Diebstahl-Angriffes, auf dem das Computerprogramm nach Anspruch 9 gespeichert ist.

11. Datenträgersignal zur Verhinderung eines Modell-Diebstahl-Angriffes, das das Computerprogramm nach Anspruch 9 überträgt.

12. Steuerungssystem eines Fahrsystems, wobei auf dem Steuerungssystem ein Softwaresystem (S) läuft, das Eingangsdaten (E) von Sensoren des Fahrsystems erhält und Ausgangsdaten für Steuergeräten des Steuerungssystems umfassend Steuergeräte für Antriebssteuerung, Fahrerassistenzsysteme, automatisierte Fahrsysteme und aktive und/oder passive Sicherheit bereitstellt, wobei zur Verhinderung eines Modell-Diebstahl-Angriffes
• das Steuerungssystem ein Computerprogramm nach Anspruch 9 ausführt,
• der computerlesbare Datenträger nach Anspruch 10 mit dem Steuerungssystem Daten übertragend verbunden und das Computerprogramm nach Anspruch 9 ausgeführt wird oder
• das Steuerungssystem das Datenträgersignal nach Anspruch 11 empfängt und das Computerprogramm nach Anspruch 9 ausführt.

13. System zur Verhinderung von Modell-Diebstahl-Angriffen umfassend
• Eingangsschnittstellen, über die das System Eingangsdaten (E) für ein Regelungs- und/oder Steuerungs-Softwaresystem erhält,
• eine Recheneinheit, die ausgeführt ist, das Verfahren nach einem der Ansprüche 1 bis 7 und/oder ein Computerprogramm nach Anspruch 9 auszuführen, um Anomalien zu erkennen, wobei das Computerprogramm in einem Speicher der Recheneinheit gespeichert ist und/oder das System eine Datenschnittstelle umfasst, über die ein computerlesbarer Datenträger nach Anspruch 10 und/oder ein Datenträgersignal nach Anspruch 11 empfangen wird,
• einen Speicher, in den die erkannten Anomalien gespeichert sind, und
• eine Ausgabeschnittstelle, um die erkannten Anomalien bereitzustellen.

## Claims

1. Computer-implemented method for preventing a model theft attack on a software system (S), wherein the software system (S) comprises a machine learning model and theft of the machine learning model is prevented, wherein the machine learning model is a black box to which an attacker has access only via query contents of input data (E) and output data and cannot obtain access to data within the system, wherein the software system (S) receives the input data (E) and provides the output data, using which data the software system (S) performs closed-loop and/or open-loop control of hardware parts including hardware parts of a driving system, comprising the steps of
• obtaining the input data (E) (V1), wherein, in the event of an attack, an attacker loads modified input data into the software system (S) in order to subsequently observe output data;
• performing anomaly identification on the input data (E) comprising a selective evaluation of individual data points, a contextual evaluation of several of the data points, a collective evaluation of groups of the data points and/or a time series evaluation of the data points, wherein the modified input data are identified as anomalies in the form of outliers from the data points including outliers in the data size of individual data points, outliers in the number of data points and/or outliers in a sequence of the data points (V2),
• wherein a probability of generating one or more of the data points from a statistical model adapted to the input data is evaluated in order to identify outliers; each of the data points is evaluated in a context of its environment and/or similarity to other data points by executing a distance and density algorithm; a given number of groups is formed from a set of similar data points by executing a cluster algorithm; an assignment of one of the data points to a class is determined by executing a machine learning algorithm that has been trained on the input data; the data points are mapped into a lower dimensionality; a comparison with stored outliers is carried out, and,
• in the event of an identified anomaly, ensuring information security of the software system (S) including documenting the attack, reporting the attack, modifying the operation of the software system (S), extracting a watermark, running the software system (S) in emergency operation and/or deactivating the software system (S) (V3) .

2. Method according to Claim 1, wherein the anomaly identification is carried out by the software system (S) before the input data (E) are fed into the software system (S) or in parallel with the evaluation of the input data (E) .
• .

3. Method according to any one of Claims 1 to 2, wherein the input data (E) are divided into
• a normal case in which the input data (E) are identical to the input data (E) that arise during regular use of the software system (S),
• an attack case in which the input data (E) are modified for the model theft attack,
• a problem case in which the input data (E) and/or output data indicate a malfunction in and/or damage to at least one of the hardware parts and
• an interference case in which the output data are interfered with by the model theft attack,
and the information security of the software system (S) is ensured in the attack case and the interference case, respectively.

4. Method according to any one of Claims 1 to 3, wherein a nearest-neighbour classification algorithm, a k-means algorithm, a support vector machine algorithm, a long short-term memory artificial neural network, an autoencoder or a replicator neuronal network is executed in order to identify outliers.

5. Method according to any one of Claims 1 to 4, wherein the modification of the operation of the software system (S) includes a change to an older version of the software system (S), a change in the configuration of the software system (S) and a change between different versions of the software system (S).

6. Method according to any one of Claims 1 to 5, wherein abnormal input data (E) are stored together with meta information including position information, time information and/or hardware part identification numbers for documentation purposes.

7. Method according to any one of Claims 1 to 6, wherein the anomaly identification is carried out locally in the driving system or externally including a remote system including a cloud and the identified anomaly is provided to the driving system, to a driver or operator of the driving system and/or to the remote system.

8. Use of the method according to any one of Claims 1 to 7 in a software system (S) of an open-loop drive controller of the driving system comprising an open-loop transmission controller, a driver assistance system, an automated driving system and/or an active and/or passive safety system.

9. Computer program for preventing a model theft attack on a software system (S) that receives input data (E) and provides output data, using which data the software system (S) performs closed-loop and/or open-loop control of hardware parts including hardware parts of a driving system, comprising commands that cause a computer system running the software system (S) to execute the steps of the method according to any one of Claims 1 to 7 when the computer program is running on the computer system.

10. Computer-readable data carrier for preventing a model theft attack, on which the computer program according to Claim 9 is stored.

11. Data carrier signal for preventing a model theft attack, which signal transmits the computer program according to Claim 9.

12. Open-loop control system of a driving system, wherein a software system (S) runs on the open-loop control system, which software system receives input data (E) from sensors of the driving system and provides output data for open-loop control devices of the open-loop control system including open-loop control devices for open-loop drive controllers, driver assistance systems, automated driving systems and active and/or passive security, wherein, in order to prevent a model theft attack,
• the open-loop control system executes a computer program according to Claim 9,
• the computer-readable data carrier according to Claim 10 is connected to the open-loop control system for data transmitting purposes and the computer program according to Claim 9 is executed or
• the open-loop control system receives the data carrier signal according to Claim 11 and executes the computer program according to Claim 9.

13. System for preventing model theft attacks, comprising
• input interfaces via which the system receives input data (E) for a closed-loop and/or open-loop control software system,
• a computing unit designed to execute the method according to any one of Claims 1 to 7 and/or a computer program according to Claim 9 in order to detect anomalies, wherein the computer program is stored in a memory of the computing unit and/or the system comprises a data interface via which a computer-readable data carrier according to Claim 10 and/or a data carrier signal according to Claim 11 is received,
• a memory in which the identified anomalies are stored, and
• an output interface to provide the identified anomalies.

## Revendications

1. Procédé mis en œuvre par ordinateur pour empêcher une attaque de vol de modèle sur un système logiciel (S), le système logiciel (S) comprenant un modèle d'apprentissage automatique et un vol du modèle d'apprentissage automatique étant empêché, le modèle d'apprentissage automatique étant une boîte noire à laquelle un attaquant n'a accès que par le biais de contenus de requête de données d'entrée (E) et de données de sortie et ne peut obtenir aucun accès aux données au sein du système, le système logiciel (S) recevant les données d'entrée (E) et fournissant les données de sortie avec lesquelles le système logiciel (S) régule et/ou commande des parties matérielles comprenant les parties matérielles d'un système de conduite, comprenant les étapes consistant à
• obtenir les données d'entrée (E) (V1), un attaquant, en cas d'attaque, introduisant dans le système logiciel (S) des données d'entrée modifiées pour observer ensuite des données de sortie ;
• effectuer une détection d'anomalie sur les données d'entrée (E), cela comprenant une évaluation sélective de points de données individuels, une évaluation contextuelle de plusieurs des points de données, une évaluation collective de groupes des points de données et/ou une évaluation en série temporelle des points de données, les données d'entrée modifiées étant détectées comme étant des anomalies sous forme de valeurs aberrantes des points de données, comprenant des valeurs aberrantes de la taille des données de points de données individuels, des valeurs aberrantes du nombre de points de données et/ou des valeurs aberrantes d'une séquence de points de données (V2),
• une probabilité de générer un ou plusieurs des points de données à partir d'un modèle statistique adapté aux données d'entrée étant évaluée pour détecter des valeurs aberrantes ; chacun des points de données étant évalué dans un contexte de son environnement et/ou de la ressemblance à l'autre des points de données par exécution d'un algorithme de distance et de densité ; un nombre donné de groupes étant formé à partir d'un ensemble de points de données semblables par exécution d'un algorithme de regroupement ; une appartenance de l'un des points de données à une classe étant déterminée par exécution d'un algorithme d'apprentissage automatique entraîné sur les données d'entrée ; les points de données étant projetés sur une dimension inférieure ; une comparaison avec des valeurs aberrantes stockées étant effectuée et
• en cas d'anomalie détectée, assurer la sécurité des informations du système logiciel (S), y compris la documentation de l'attaque, le signalement de l'attaque, la modification du fonctionnement du système logiciel (S), l'extraction d'un filigrane, l'exécution du système logiciel (S) en mode d'urgence et/ou la désactivation du système logiciel (S) (V3).

2. Procédé selon la revendication 1, dans lequel la détection d'anomalie est effectuée par le système logiciel (S) avant que les données d'entrée (E) soient introduites dans le système logiciel (S) ou en parallèle avec l'évaluation des données d'entrée (E).
• .

3. Procédé selon l'une quelconque des revendications 1 à 2, dans lequel les données d'entrée (E) se répartissent entre
• un cas normal dans lequel les données d'entrée (E) sont identiques aux données d'entrée (E) qui apparaissent lors d'une utilisation régulière du système logiciel (S),
• un cas d'attaque dans lequel les données d'entrée (E) sont modifiées par l'attaque de vol de modèle,
• un cas de problème dans lequel les données d'entrée (E) et/ou de sortie indiquent un dysfonctionnement et/ou une dégradation d'au moins l'une des parties matérielles et
• un cas d'incident dans lequel les données de sortie sont perturbées par l'attaque de vol de modèle,
et la sécurité des informations du système logiciel (S) est respectivement assurée en cas d'attaque et en cas d'incident.

4. Procédé selon l'une quelconque des revendications 1 à 3, dans lequel un algorithme de classification du voisin le plus proche, un algorithme de moyenne k, un algorithme de machine à vecteur de support, un réseau neuronal artificiel à mémoire à long-court terme, un autocodeur ou un réseau neuronal réplicateur sont exécutés pour la détection de valeurs aberrantes.

5. Procédé selon l'une quelconque des revendications 1 à 4, dans lequel le changement de mode de fonctionnement du système logiciel (S) comprend un passage à une version antérieure du système logiciel (S), un changement de configuration du système logiciel (S) et un changement entre différentes versions du système logiciel (S).

6. Procédé selon l'une quelconque des revendications 1 à 5, dans lequel des données d'entrée anormales (E) conjointement avec des méta-informations comprenant des informations de position, des informations de temps et/ou des numéros d'identification de parties matérielles sont stockées à des fins de documentation.

7. Procédé selon l'une quelconque des revendications 1 à 6, dans lequel la détection d'anomalie est effectuée localement dans le système de conduite ou de manière externe, comprenant un système distant comprenant un nuage, et l'anomalie détectée est fournie au système de conduite, à un conducteur ou à un opérateur du système de conduite et/ou au système distant.

8. Utilisation du procédé selon l'une quelconque des revendications 1 à 7 dans un système logiciel (S) d'une commande d'entraînement du système de conduite, comprenant une commande de transmission, un système d'assistance à la conduite, un système de conduite automatisé et/ou un système de sécurité actif et/ou passif.

9. Programme informatique destiné à empêcher une attaque de vol de modèle sur un système logiciel (S) qui reçoit des données d'entrée (E) et fournit des données de sortie avec lesquelles le système logiciel (S) régule et/ou commande des parties matérielles d'un système de conduite, comprenant des commandes qui amènent un système informatique, qui exécute le système logiciel (S), à effectuer les étapes du procédé selon l'une quelconque des revendications 1 à 7 lorsque le programme informatique est exécuté sur le système informatique.

10. Support de données lisible par ordinateur pour empêcher une attaque de vol de modèle, sur lequel est stocké le programme informatique selon la revendication 9.

11. Signal de support de données destiné à empêcher une attaque de vol de modèle, qui transmet le programme informatique selon la revendication 9.

12. Système de commande d'un système de conduite, dans lequel un système logiciel (S) est exécuté sur le système de commande et reçoit des données d'entrée (E) en provenance de capteurs du système de conduite et fournit des données de sortie destinées à des unités de commande du système de commande, qui comprend des unités de commande destinées à la commande d'entraînement, des systèmes d'assistance à la conduite, des systèmes d'entraînement automatisés et une sécurité active et/ou passive, dans lequel, pour empêcher une attaque de vol de modèle,
• le système de commande exécute un programme informatique selon la revendication 9,
• le support de données lisible par ordinateur selon la revendication 10 est relié par transmission de données au système de commande et le programme informatique selon la revendication 9 est exécuté, ou
• le système de commande reçoit le signal de support de données selon la revendication 11 et exécute le programme informatique selon la revendication 9.

13. Système pour empêcher des attaques de vol de modèle, comprenant
• des interfaces d'entrée par l'intermédiaire desquelles le système reçoit des données d'entrée (E) destinées à un système logiciel de régulation et/ou de commande,
• une unité de calcul qui est conçue pour mettre en œuvre le procédé selon l'une quelconque des revendications 1 à 7 et/ou un programme informatique selon la revendication 9 afin de détecter des anomalies, dans lequel le programme informatique est stocké dans une mémoire de l'unité de calcul et/ou le système comprend une interface de données par l'intermédiaire de laquelle un support de données lisible par ordinateur selon la revendication 10 et/ou un signal de support de données selon la revendication 11 est reçu,
• une mémoire qui stocke les anomalies détectées, et
• une interface de sortie destinée à fournir les anomalies détectées.
